(19) Europäisches Patentamt

European Patent Office

Office européen des brevets

(11) Publication number: **0 144 450**
**B1**

(12) **EUROPEAN PATENT SPECIFICATION**

(45) Date of publication of patent specification: **23.03.88**

(21) Application number: **83111536.5**

(22) Date of filing: **18.11.83**

(51) Int. Cl.⁴: **B 65 D 41/08, B 29 C 49/22**

(54) Polyethyleneterephthalate bottle with a two-layered neck.

(43) Date of publication of application:
**19.06.85 Bulletin 85/25**

(45) Publication of the grant of the patent:
**23.03.88 Bulletin 88/12**

(84) Designated Contracting States:
**DE FR GB IT**

(56) References cited:
**EP-A-0 073 151**
**DE-U-1 906 897**
**FR-A-2 440 824**
**GB-A-2 047 606**
**GB-A-2 078 194**

**PLASTICS ENGINEERING, vol. 37, no. 3, March
1981, pages 83-87, Manchester, New
Hampshire, US; J.L. SZAJNA: "What every
designer of plastic bottles should know about
structure"**

(73) Proprietor: **Aoki, Katashi**
**6037 Ohazaminamijo Sakakimachi
Hanishina-gun Nagano-ken (JP)**

(72) Inventor: **Aoki, Katashi**
**6037 Ohazaminamijo Sakakimachi
Hanishina-gun Nagano-ken (JP)**

(74) Representative: **Twelmeier, Ulrich, Dipl.Phys.
et al
Patentanwälte Dr. Rudolf Bauer Dipl.-Ing.Helmut
Hubbuch, Dipl.Phys. Ulrich Twelmeier Westliche
Karl-Friedrich-Strasse 29-31
D-7530 Pforzheim (DE)**

## Description

### 1. Background of the Invention

A biaxially oriented polyethyleneterephthalate bottle manufactured by axially stretching a premolded preform or a parison within a blow cavity and applying air blow thereto is small in permeability of gases such as oxygen, carbon dioxide gas, etc. and is excellent in pressure resistance, rigidity, transparency, etc., such bottles being used as bottles for carbonated beverage. However, the polyethyleneterephthalate is poor in heat resistance since it is low in molding temperature of bottle as compared with polyvinyl chloride resin and polypropylene resin. Therefore, where they are used as bottles for a liquid seasoning which are heated and filled at a temperature above approximately 80°C, molded bottles are further subjected to heat treatment to provide the heat resistance.

Most of polyethyleneterephthalate bottles manufactured by stretch-blowing are molded by holding a neck of an injection molded preform or a parison. For this reason, a portion subjected to biaxially orientation by stretch blow molding is below a neck positioned within the blow cavity, and the neck is in the state injection molded, which constitutes a neck of a bottle without modification.

Thermal deformation which occurs when the polyethyleneterephthalate bottle is heated and filled with contents is produced in both a neck and a bottle body. It is said that the thermal deformation of the neck is caused by the fact that the neck remains injection molded and not crystallized whereas the thermal deformation of the bottle body is caused by residual stress at the time of stretch blowing. This thermal deformation of the bottle body can be solved by applying heat above 100°C after the bottle has been molded to remove the residual stress. However, since the neck is formed in wall thickness greater than that of the bottle body, it takes time to crystallize it by heat treatment to provide a heat resistance.

In view of the above, a prior art attempt as recited in the generic part of claim 1 has been made so that a neck of a bottle is made to have a two-layered construction, one layer being formed of a resin having a heat resistance. In this case, the layer having a heat resistance is provided externally of polyethyleneterephthalate forming the inner layer of the bottle neck as well as the rest of the bottle by insert molding but is different in properties from polyethyleneterephthalate, and therefore, an open end of the neck formed by the two layers is deviated to produce a shoulder. Formation of such a shoulder results from the difference in heat shrinkage rate between polyethyleneterephthalate and the heat resisting member inserted into the neck, and even if the deviation in the open end resulting from the shrinkage difference is extremely small, a cap seal by mechanical means proves incomplete.

When the shoulder is produced in the open end of the neck, a clearance is formed between said shoulder and a packing on the side of the cap after the cap has been sealed, the content entering the clearance is permeated between the two layers to separate the inner layer from the outer layer, which are once joined. Moreover, it is suffered from a drawback in that when the outer layer of the bottle is transparent, the external appearance of the bottle neck is impaired by the permeated liquid.

### 2. Summary of the Invention

It is therefore an object of the present invention to eliminate the disadvantages noted above with respect to the prior art and to provide a bottle of the kind specified in the generic part of claim 1, wherein a deviation resulting from a difference in shrinkage is not produced in an open end of the neck, wherein even if the outer layer member having a heat resistance is inferior in gas permeability to polyethyleneterephthalate, the gas permeability in the bottle neck can be prevented by using polyethyleneterephthalate which forms the inner layer of the bottle, and wherein in case the outer layer of the neck is formed of transparent resin, it is extremely difficult to distinguish such a bottle from a bottle which is totally formed of polyethyleneterephthalate.

According to the present invention the aforesaid object is accomplished by a bottle having the features included in claim 1.

The end of the inner layer of the bottle neck which is formed of polyethyleneterephthalate is exposed at the neck opening to cover the upper end of the outer layer body which is integrally formed in its outer peripheral surface with threads or the like necessary for a cap seal and which is formed of a heat resistant resin, of which polycarbonate or crystallized polyethyleneterephthalate are examples. In this way a joining line of the two layers at the open end of the neck is moved to a portion outside the cap seal edge, whereby even if the shrinkage rate is different between the two layers which constitutes the bottle neck, a deviation resulting from said shrinkage difference is not extended to the open end of the neck.

Integration between the outer layer body and inner layer may be achieved by insert moulding when a preform or a parison is injection molded. The outer layer body integrally bonded to the inner layer by injection molding can prevent the inner layer of polyethyleneterephthalate from thermal deformation by heating from outside after it is molded, or it can protect the neck so that even if thermal deformation should occur, such thermal deformation would not appear externally.

The outer layer body and inner layer are integrally formed when a preform or a parison of the bottle is injection molded. However, they are never completely bonded to each other but the joined surfaces of the two layers can be separated by a great shock. Since the thermal deformation of the inner layer by the outer layer body is compensated for the first time when both the layers are completely joined, it is designed in the present invention that the inner layer and outer layer body are brought into engagement with each other at the opening of the neck, preferably in a way that either the inner layer or the outer layer body is partly projected and embedded into the other layer so that the outer layer body is secured even in a circumferential direction of the bottle neck to prevent the outer layer body from being moved by the external force at the time of cap seal.

In the following, the present invention will be further described in detail by way of embodiments shown in the drawings.

3. Brief Description of the Drawings

Fig. 1 is a longitudinal sectional front view of a neck of a polyethyleneterephthalate bottle in accordance with this invention.

Fig. 2 is an enlarged longitudinal sectional view of an open end of the neck.

Fig. 3 is a longitudinal sectional front view of a bottle neck in a second embodiment of the invention.

Fig. 4 is an enlarged longitudinal sectional view of an open end of said bottle neck.

Fig. 5 is a longitudinal sectional front view of a bottle neck in a third embodiment of the invention.

Fig. 6 is a sectional view taken on line VI—VI of Fig. 5.

Fig. 7 is a side view of an upper portion of an outer layer body.

4. Description of the Preferred Embodiments

In the drawings, a reference numeral 1 designates a bottle formed of polyethyleneterephthalate and a reference numeral 2 designates a neck, which has a two-layered construction consisting of an inner layer 3 and an outer layer body 4.

The inner layer 3 is formed of polyethyleneterephthalate of which a bottle body is formed, and the outer layer body 4 in the form of an outer layer is formed of polycarbonate. This outer layer body 4 is injection molded together with cap threads 5 in the outer periphery thereof and has the same sectional shape as the external shape of the neck 2.

Joining of the inner layer 3 and outer layer body 4 can be easily accomplished by inserting the outer layer body 4 into a cavity when a preform of the bottle 1 is molded. More specifically, the inner layer 3 can be molded merely by inserting the outer layer body 4 pre-injection molded into a neck mold of a preform and introducing polyethyleneterephthalate forming a preform between the outer layer body 4 and a core mold in the central portion of the cavity, and at the same time the inner layer 3 is joined to the outer layer body 4 thereby forming the aforesaid neck 2 of a two-layered construction.

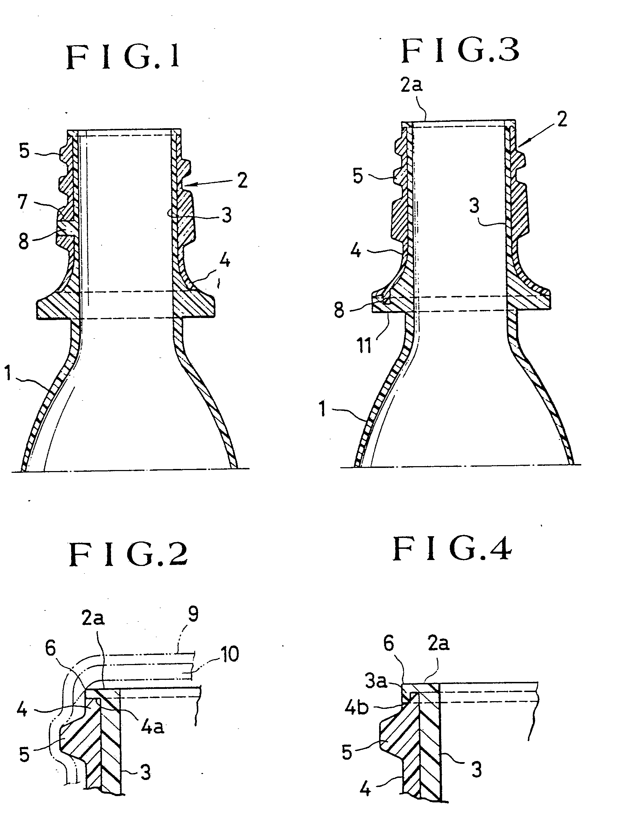

As will be best shown in Fig. 2, the inner layer 3 is exposed at an opening of the neck and covers an upper end 4a of the outer layer body 4 to form an open end 2a of the neck. A distal end of the inner layer 3 is made to the same face as the outer surface of the outer layer body 4, and a seal edge 6 is formed by an upper end edge.

The outer layer body 4 is formed in its side with a through-hole 7 into which flows a part of polyethyleneterephthalate forming the inner layer 3 to form a projection 8. The projection 8 and the through-hole 7 are fitted whereby the outer layer body 4 is secured even in a circumferential direction of the neck 2.

In the bottle neck 2 formed into the two-layered construction as described above, a joining line for both layers is positioned at the side of the neck under the seal edge 6 by the distal end of the inner layer 3 which covers the upper end 4a of the outer layer body 4, and all the inside of a portion sealed by a packing 10 of a cap 9 is occupied by polyethyleneterephthalate forming the inner layer 3.

Accordingly, even if the outer layer body 4 is formed of polycarbonate, gas impermeability in the neck 2 is not impaired, and the inner layer 3 is protected from external heat, by the heat resisting outer layer body 4, as a consequence of which thermal deformation is hardly to occur in the neck 2.

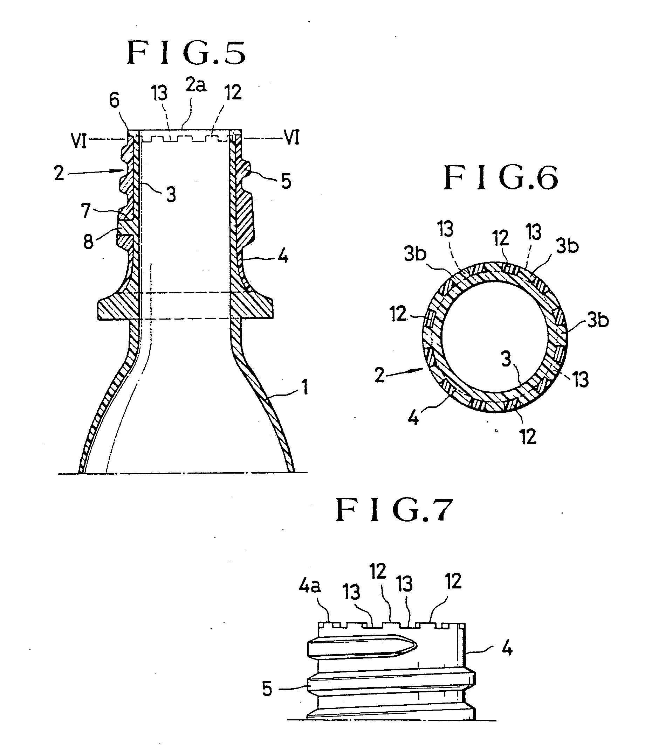

In the embodiments shown in Figs. 3 and 5, the inner layer 3 and outer layer body 4 are joined tightly to each other so that even when contents having a relatively high filling temperature are filled, the neck 2 is prevented from the occurrence of a thermal deformation.

In the embodiment shown in Fig. 3, a shoulder 4b is formed externally of the upper end of the outer layer body 4 and the distal end 3a of the inner layer 3 is molded to the shoulder 4b whereby the end of the inner layer and the upper end of the outer layer body are brought into engagement with each other to reduce the thermal deformation of the inner layer end in a radial direction to a minimum.

The shape of the lower end of the outer layer body 4 is formed into the same shape as that of the upper surface of a support ring 11 integral with the lower side of the neck, and a sprue projected internally of said lower end is embedded as said projection 8 into the support ring 11 to secure the outer layer body 4 in a circumferential direction.

In the embodiment shown in Fig. 5, the inner layer 3 and outer layer body 4 are engaging each other more tightly at the opening of the neck. As shown in Fig. 7, the predetermined number of projecting portions 12, 12 and recessed portions 13, 13 are radially alternately formed in the upper end 4a of the outer layer body 4, and the end of the inner layer 3 is molded on the projecting portions 12, 12 and recessed portions 13, 13 to cover the upper end 4a of the outer layer body, said recessed portions 13, 13 being embedded by a part 3b of the inner layer 3 formed of polyethyleneterephthalate to alternately engage both the elements each other.

In such a construction, the inner layer 3 and the outer layer body 4 are engaging each other in a circumferential direction to maintain engagement therebetween, and therefore, even if the inner layer 3 is molded to be thin in wall thickness, both the layers are more tightly joined and even if the inner layer 3 tends to be shrunk by heating, such shrinkage can be prevented by the open end of the neck.

Accordingly, in the bottle formed of polyethyleneterephthalate in accordance with the present invention, the bottle is excellent in heat resistance even if the neck 2 is not particularly heat treated, the thermal deformation of the neck which is liable to occur in heating and filling hardly occurs, and the gas impermeability of the neck can be kept. Moreover, the two-layered construction of the neck can be extremely easily obtained by making use of insert molding. In addition, where a bottle is molded by stretch blowing, an obstacle is not encountered by the two-layered construction of the neck but the injection stretch blowing heretofore employed can be applied for the manufacture of a bottle. Furthermore, when the outer layer body is formed of resin having a transparency such as polycarbonate, it is extremely difficult to distinguish the obtained article if the latter has a neck which is of the two-layered construction, not to impair the value as a bottle of polyethyleneterephthalate.

**Claims**

1. A biaxially oriented bottle comprising a two-layered neck provided with cap threads or the like cap retaining means in the outer periphery thereof and consisting (a) of a heat resistant resin forming an outer layer of the neck and (b) of polyethyleneterephthalate forming the inner layer of the neck as well as the rest of the bottle, characterized in that said inner layer (3) of the neck (2) is exposed at the open end (2a) thereof and covers the upper end of the outer layer body (4) and so provides an upper end edge forming a sealing edge (6) for a cap (9).

2. A bottle according to claim 1 wherein said outer layer body (4) of said neck (2) has a shoulder (4b) in an outer periphery of the upper end thereof, and a distal end (3a) of the inner layer (3) covering the upper end of the outer layer body (4) engages said shoulder (4b).

3. A bottle according to claim 1 wherein said upper end (4a) of said outer layer body (4) is formed into castellated surfaces (12, 13), said upper end (4a) being covered by the end of said inner layer (3), and an end of the inner layer (3) and the upper end (4a) of the outer layer (4) are integrally engaged by said castellated surfaces (12, 13).

4. A bottle according to claim 1 wherein said outer layer body (4) has a through-hole (7) in the side thereof, and said through-hole (7) and a projection (8) projecting from the side of said inner layer (3) are fitted whereby the outer layer (4) is secured in a circumferential direction.

5. A bottle according to claim 1 wherein the lower portion of said outer layer body (4) is formed to have the same shape as that of an upper surface of a support ring (11) formed under the neck (2) of the bottle, a sprue (8) projecting from the opening at the lower end of the outer layer body (4) is embedded into the support ring (11) so that the outer layer body (4) is secured in a circumferential direction.

6. A bottle according to claim 1 wherein the outer layer body (4) is formed of polycarbonate.

**Patentansprüche**

1. Biaxial orientierte Flasche, die einen zweilagigen Hals mit an seinem äußeren Umfang vorgesehenen Gewindegängen oder dergleichen Halterungen für eine Kappe hat und (a) aus einem wärmebeständigen Harz, aus welchem eine äußere Lage des Halses gebildet ist, und (b) aus Polyäthylenterephtalat besteht, aus welchem die innere Lage und der Rest der Flasche gebildet sind, dadurch gekennzeichnet, dass die innere Lage (3) des Halses (2) an dessen offenem Ende (2a) offen zutage tritt und das obere Ende des durch die äußere Lage gebildeten Körpers (4) überdeckt und dadurch eine als Dichtkante (6) für eine Kappe (9) dienende, am oberen Ende des Halses (2) liegende Kante bildet.

2. Eine Flasche nach Anspruch 1, in welcher der durch die äußere Lage gebildete Körper (4) des Halses (2) an seinem oberen Ende am äußeren Umfang eine Schulter (4b) hat, an welcher die innere Lage (3), die das obere Ende des durch die äußere Lage gebildeten Körpers (4) überdeckt, mit einem aussenseitlich liegenden Ende (3a) anliegt.

3. Ein Flasche nach Anspruch 1, in welcher das obere Ende (4a) des durch die äußere Lage gebildeten Körpers (4) mit kastellartig abgesetzten Oberflächen (12, 13) ausgebildet und von dem Ende der inneren Lage (3) so überdeckt ist, dass die innere Lage (3) mit einem Bereich ihres Endes und das obere Ende (4a) der äußeren Lage (4) mit ihren kastellartig abgesetzten Oberflächen (12, 13) vollständig miteinander verzahnt sind.

4. Eine Flasche nach Anspruch 1, in welcher der durch die äußere Lage gebildete Körper (4) an seiner Seite ein durchgehendes Loch (7) hat, in welches ein von der Seite der inneren Lage (3) abstehender Vorsprung (8) eingepaßt ist, wodurch die äußere Lage (4) gegen eine Bewegung in Umfangsrichtung gesichert ist.

5. Eine Flasche nach Anspruch 1, in welcher der untere Teil des durch die äußere Lage gebildeten Körpers (4) so gestaltet ist, dass er mit der Gestalt der nach oben weisenden Oberfläche eines unter dem Hals (2) an der Flansche ausgebildeten Stützrings (11) übereinstimmt, wobei ein vor der Öffnung am unteren Ende des durch die äußere Lage gebildeten Körpers (4) vorspringender Zapfen (8) so im Stützring (11) eingebettet ist, dass der durch die äußere Lage gebildete Körper (4) gegen eine Bewegung in Umfangsrichtung gesichert ist.

6. Eine Flasche nach Anspruch 1, in welcher die äußere Lage (4) aus Polykarbonat gebildet ist.

## Revendications

1. Bouteille orientée à deux axes, comprenant un col en double couche munit des spires ou des dispositifs de serrage semblables à son périmètre extérieur pour un couvercle et etant composée (a) d'une résine synthétique résistante aux effets de la chaleur, dont une couche extérieure du col est formée, et (b) de polyéthylène terephtalate dont la couche intérieure du col et le reste de la bouteille sont formés, caracterisée en ce que ladite couche intérieure du col (2) est exposée au bout ouvert (2a) du col (2) et couvre le bout supérieure du corps (4), formé par la couche extérieure, ainsi formant une arête au bout supérieure du col (2) étant une arête d'étanchéité pour un couvercle (9).

2. Bouteille selon la revendication 1, dont ledit corps (4), formé par la couche extérieure de ledit col (2), est muni d'une épaule (4b) au périmètre extérieure, à laquelle la couche intérieure (3), recouvrant le bout supérieure du corps (4) formé par la couche extérieure, colle avec un bout (3a) situé à côte extérieure.

3. Bouteille selon revendication 1, dont ledit bout supérieure (4a) de ledit corps (4), formé par la couche extérieure, est muni des surfaces crénelées et tellement recouvert du bout de ladite couche intérieure (3) que la couche intérieure avec une partie de son bout et le bout supérieure (4a) de la couche extérieure (4) sont engrenés entièrement avec lesdites surfaces crénelées (12, 13).

4. Bouteile selon revendication 1, dont ledit corps (4), formé par la couche extérieure, est traversée par un trou (7) à son côté, dans lequel une saillie (8) écartée de la couche intérieure est emboîtée, de sorte que la couche exterieure (4) est bloquée contre un mouvement en direction perimétrique.

5. Bouteile selon revendication 1, dont la partie inférieure du corps (4), formé par la couche extérieure, est formé conformément à la forme de la surface d'un anneau de soutien (11) montrant en haut qui est formé au-dessous du col (2) à la bouteille, un tenon (8) qui déborde du bout inférieure de l'ouverture du corps (4), formé par la couche extérieure, s'encastre dans l'anneau de soutien (11) pour bloquer le corps (4), formé par la couche extérieure, contre un mouvement en direction périmétrique.

6. Bouteille selon revendication 1, dont la couche extérieure est composée de polycarbo-nate.

0 144 450

## FIG.1

## FIG.3

## FIG.2

## FIG.4

1

# F I G.5

# F I G.6

# F I G.7